# EUROPEAN PATENT SPECIFICATION

(11) **EP 1 460 393 B1**
(45) Date of publication and mention of the grant of the patent: **07.08.2013**
(21) Application number: 03023566.7
(22) Date of filing: 16.10.2003
(51) Int. Cl.: H01H 36/02, G01F 1/24

(54) **A flow detector with magnetic sensor**
Durchflussmesser mit Magnetsensor
Débitmètre avec capteur magnétique

(30) Priority: 21.03.2003 IT MI20030551
(43) Date of publication of application: 22.09.2004
(73) Proprietor: FUGAS SPA, 20090 Trezzano sul Naviglio (Milan) (IT)
(72) Inventor: Fugazza, Giuseppe, 20090 Trezzano Sul Naviglio (MI) (IT); Tronconi, Alberto, 20019 Settimo Milanese (MI) (IT)
(74) Representative: Ripamonti, Enrico

(56) References cited:
- EP-A1- 1 022 569
- DE-A- 3 300 798
- FR-A- 2 441 833
- GB-A- 2 063 565
- GB-A- 2 247 920
- GB-A- 2 270 758
- US-A- 2 419 942
- US-A- 5 503 175
- US-A- 5 827 978

## Description

The present invention concerns an improved flow detector, i.e. a component adapted to sense the presence of a fluid flow in a hydraulic plant. The invention finds advantageous employment in combined heating and sanitary water plants, that is devices for domestic use in which the water heated by a gas burner is used both to feed heat radiating elements (heaters), and to heat water (so called sanitary water) for different uses. This use of the invention is not to be considered as a limitation of the possible applications of the device of the invention.

Flow detectors are known which provide for a magnetic sensor, such sensors including a case containing an axially movable magnet displaced by the flow of the liquid circulating in the plant (in the following for simplicity sake reference will be made to water), and a sensor that is axially fitted with respect to the magnet at a location external to the case, which sensor is adapted to generate an electric signal that changes when the magnetic field produced by the movement of the magnet changes. For example a sensor of this type is disclosed in European Patent n. 797 057 in the name of the present applicant or in FR2441833 which forms the preamble of the main claim.

US 5 002 090 discloses a flow sensor for controlling the flow of a liquid in a plant, comprising a body with a fluid inlet port and a fluid outlet port axially located, in which body a magnet is movable being carried by a piston shaped so that not to obstruct the outlet port when the fluid flow pushes this latter towards the outlet port. The magnet cooperates with a laterally positioned external sensor.

This device has been designed for achieving a maximum sensibility without optimising its performance in respect of the load losses at the larger flow levels. Besides, since the magnet is located in the main flow of the fluid, some of the magnetic materials can be damaged (i.e. corroded) by abrasive materials entrained by the liquid, and ferrous particles can be deposited around the surface of the magnet with the risk of blocking its motion. Although the magnet could be protected by encapsulating it within the piston, this would involve a reduction of the magnet size.

US 5 827 978 discloses a detector used to provide a signal indicative of the flow rate of a fluid in a conduct, said flow detector comprising an elongated internal hollow body provided with an inlet opening and an outlet opening, a piston axially movable within said body, a permanent magnet associated with the piston, and a magnetic sensor laterally located within said elongated body. The piston is axially movable in either directions against the resistance exerted by a coil spring and the position of the permanent magnet associated with the sliding piston is sensed by the sensor to provide a signal indicative of the flow rate.

GB 2 270 758 discloses an apparatus for determining the flow rate of a fluid comprising a float located in a vessel, the float being provided with a magnet and a sensor to determine the position of the float for providing an indication of the flow rate.

DE 33 00 798 discloses an apparatus for flow measurement of flowing media comprising a float which contains a first magnet cooperating with a second magnet sliding with a separate channel and whose respective position is visible through a sight glass.

US 5 503 175 discloses a water safety valve for shutting off water flow comprising a magnet mounted on a sliding piston and a magnetically operated switch.

GB 2 247 920 a fluid pump comprising flow sensing means cooperating with a magnetic float to control the fluid flow through a pump.

Flow actuated switches magnetically operated are also disclosed in US 2 419 942, and GB 2 063 565.

It is an object of the present invention to overcome the limitations of the known devices, and particularly to provide a flow detector having good sensitivity, high reliability and low load losses, which is of a simple design and easy to test, and that further provides for a visual indication of the flow conditions.

According to the invention, the above objects are achieved through a flow detector as claimed in claim 1. Further advantageous characteristics are recited in the dependent claims.

The presently described flow detector provides for the use of a movable permanent magnet together with a laterally positioned magnetic sensor, so as to utilise the inversion of the magnetic flow acting on the sensor when the magnet moves towards a limit position and the sign of the electrical signal generated by the sensor changes.

The presently described device can be used with its axis disposed along any desired direction in a fluid entraining particles and specks in suspension.

The flow detector according to the invention further provides for a water lateral outlet so that the magnet is not permanently exposed to the main flow.

Advantageously between the piston and the hollow body there are provided relatively large plays, and the device according to the invention can operate - at the proper flow rates - with even relatively large plays, for example of a size larger than the meshes of the filter incorporated in the device.

In the described device the shape and the disposition of the magnet and the Hall sensor contribute to obtain a highly reliable device design so that all the detector specimens will supply a clear indication of the switching in spite of the unavoidable characteristic spreading of the of magnets and sensors, in a range of very short runs of the movable member. This way, even with a very short run of the movable member, the device achieves a considerable additional safety run, that is the displacement beyond the switching point, and the axial position of the movable member can be effectively centred at the large flow rates, over the outlet slot, thus obtaining low load losses.

The device according to the invention allows to use a large diameter magnet, with a diameter substantially equal (but for the plays) to that inner diameter of the cylindrical duct in which the movable member is housed.

Advantageously, mostly in respect of fastening the components, a toroidal magnet is used with an axial dimension (length) much shorter than its diameter.

The invention will now be described with reference to the attached drawings that illustrate preferred but not limiting embodiments thereof, in which:
Fig. 1 is a view illustrating a flow detector according to the invention;
Fig. 2 is a longitudinal cross-section view of the flow detector of Fig. 1;
Fig. 3 is a front view of the flow detector of Fig. 1;
Figs. 4 to 6 illustrate the relative positioning of the sensor and the magnet during the operation of the flow detector according to the invention;
Fig. 7 is an exploded perspective view illustrating a flow detector according to the invention fitted to a hydraulic group.

Throughout all the Figures the same numerical references have been used for indicating parts that are equal or functionally equivalent. In the description, the terms upstream and downstream are referred to the fluid flow to detect.

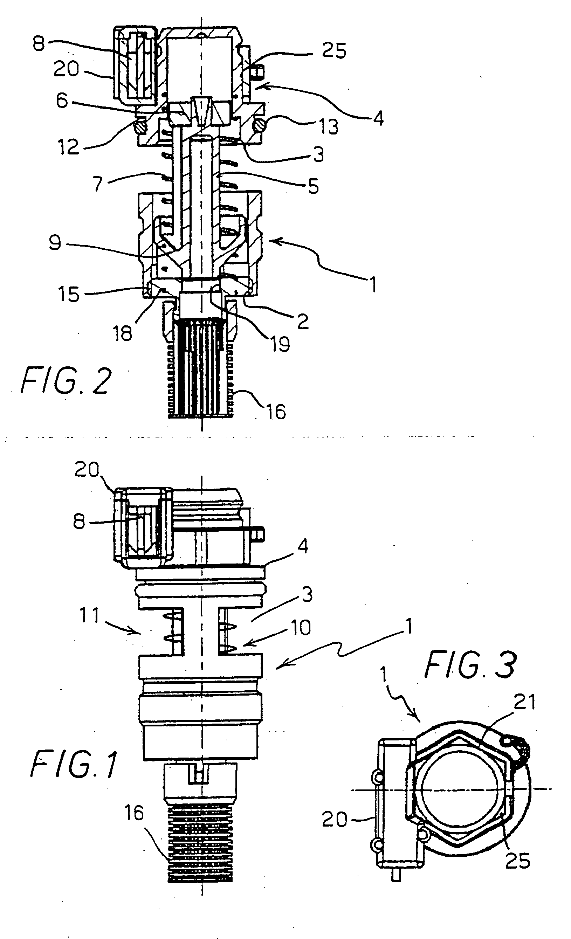

With reference to Figures 1 to 3, a flow detector according to the invention comprises a case 1 shaped as an elongated hollow body, provided with an inlet opening 2 and an outlet opening 3 implemented as two side windows 10, 11 that breaks the continuity of the body 1, and a closed end portion 4 provided with a section 25 having an outer shape that is hexagonal or anyhow not cylindrical.

Within the body 1 there is housed a member 5, axially movable along the body 1, and surrounded by a helical return spring 7. The movable member 5 is formed as a rod carrying at one end a (preferably toroidal) permanent magnet 6, and shaped at the other end with a flanged conical portion 9 having an outer diameter substantially equal to the inner diameter of the body 1, with this flanged portion receiving the end of the spring 7.

The movable member 5 is made as a one-piece component by moulding a resin material compatible with the fluid to be detected. Its conical portion 9 accomplishes two purposes, namely it imparts the motion to the member, i.e. the larger diameter portion causes the load losses required to move the movable member, and acts as a centring member for the return spring 7. The movable member 5 further supports and centers the magnet, and is shaped so as to keep only the movable member exposed in the main flow, while the spring guide and the magnet, although immersed in the fluid, are protected by the conical portion and are less subjected to be hit by solid particles.

The magnet 6 results in being located downstream of the outlet 3, both in the rest position and in the position it reaches when a flow of water occurs. At the inlet 2 the end of the body 1 is provided with an inner threading 15 on which a metal ring 18 is screwed, equipped with a central opening 19 and carrying a cylindrical filter 16 with meshes of predetermined sizes. The filter can eventually incorporate a device (not shown) for limiting the flow rate.

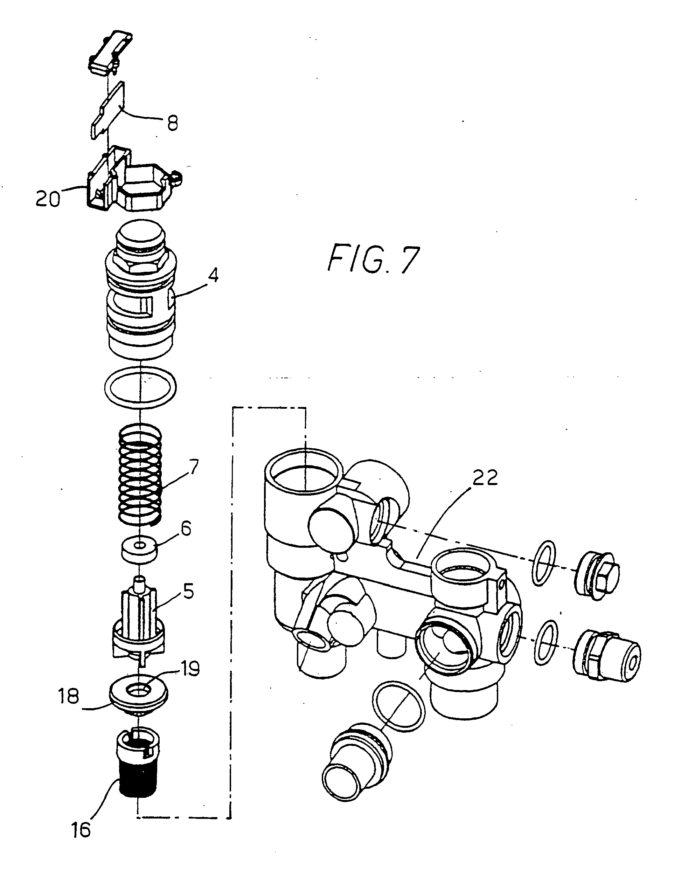

The end portion 4 is formed with a groove 12 housing a seal 13, and the whole device is fitted in a suitable component of the hydraulic plant, such as a generally cylindrical body or a more complex component such as the hydraulic group shown in Fig. 7. On the end portion 4 of the body 1 there is mounted a small container 20 housing a magnetic sensor 8 which results in being laterally positioned with respect to the axis of the magnet 6. Advantageously, the container 20 is provided with a hexagonal collar 21 adapted to engage the hexagonal portion 25 so as to position a circuit (comprising the magnetic sensor 8) housed inside it in a predetermined angular arrangement. The container 20 is snap-fitted to the end portion and it is at least partially transparent, so that to make visible to the outside the lighting of a light indicator, typically a LED, that provides a visual indication of the state of the flow inside the flow detector, for instance the overcoming of the flow rate required for starting the gas burner in a heating and sanitary water plant.

The sensor 8 is made up by a sensor using the Hall effect with an associated CMOS technology circuitry and is provided with 3 insulated electric conductors, typically for the power supply common line, the generated signal and the positive supply lines.

The flow detector is normally fitted inside of a housing member provided with an axial fitting for the inlet 2 and a side or lateral fitting for the outlet 3, whose configurations can vary according to the plant in which the assembly is to be mounted.

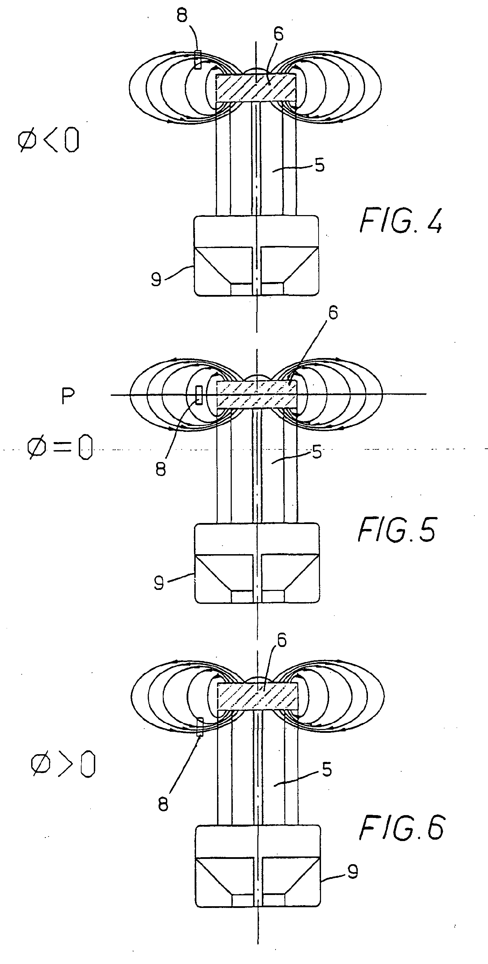

Figs. 4 to 6 schematically illustrate the relative positions of the components and the operation of the detector according to the invention. In the Figures there have been shown the magnetic flow lines of the toroidal magnet 6. The run (or displacement) of the the magnet 6 carried by the movable member 5 occurs from a rest position (corresponding to a substantially null flow) to a position indicating the presence of a flow, that are opposite with respect to a point P where the magnet is substantially abreast of the sensor. More precisely, Fig. 4 illustrates the rest position in absence of any liquid flow. The magnetic flux Φ flowing across the sensor 8 is conventionally assumed as negative. Fig. 5 shows an intermediate position of the magnet in its motion towards the end position that is reached in presence of a liquid flow: the magnet is substantially abreast of the sensor 8 so that the magnet flux across the sensor is practically null. The end position of the magnet 6 is shown in Fig. 6, i.e. within the closed portion 4 in which the sensor 8 is crossed by a flow Φ of opposite sign to that of Fig. 4. Therefore the detection of the flow occurs through an inversion of the magnetic flow crossing the sensor, thus supplying a particularly clean and sure indication. In the space surrounding the plane orthogonal to the magnet motion and containing the point P, the magnetic flux switches from a maximum flow along direction N-S to a maximum flow along direction S-N, thus switching (turning on and off) the sensor in a very reliable manner and with very short sensor displacements.

According to a preferred embodiment, a high sensitivity and a very reliable switching with a short run of the movable member is achieved when the diameter of magnet 6 is about 2-5 times, and preferably 3-4 times, its thickness.

Fig. 7 is an exploded perspective view illustrating the assembling of the flow detector according to the invention into the return hydraulic group 22 of a mixed plant for heating and sanitary water. The group is equipped with the necessary accessories and fittings, some of which are shown in schematic form, such as the faucet or the solenoid valve, several probes, the fittings towards the secondary heat exchanger, the pump, the safety valve, the expansion vessel and, finally, the fittings towards the external hydric network, i.e. the sanitary water inlet and the heating return circuit. It is to be understood that the flow detector of the invention can be employed also in a delivery group or in other components with different configurations.

Although the invention has been illustrated with reference to preferred embodiments, it is susceptible in general of other applications and modifications that fall within the scope of the invention as it will become evident to the skilled of the art.

## Claims

1. A detector for sensing i.e. detecting the presence or absence of the flow of a liquid circulating through a plant, said flow detector comprising:
an elongated internally hollow body (1), provided with an inlet opening (2) and an outlet opening (3) for said liquid, a member (5) axially movable within said body (1) and a permanent magnet (6) fitted to said movable element, and a magnetic sensor (8) laterally located on said elongated body, said magnet (6) being mounted at an end of said movable element (5) in such a manner as to accomplish a displacement between a first and a second position, said magnet (6) having a toroidal shape, said sensor (8) comprising a Hall effect detector with an associated CMOS technology circuitry, the movement of said magnet between said first and second positions causing an inversion of the magnetic flow (Φ) crossing said sensor, thus switching i.e. turning on and off the sensor and allowing the detection of the presence of the flow into the hollow body (1), **characterized in that** the diameter of the magnet (6) is about 2-5 times, and preferably 3-4 times, its thickness, **in that** said outlet opening (3) is a lateral opening disposed upstream of said magnet (6) and **characterized in that** said movable member (5) is made as a one-piece component by moulding of a plastic material, and **in that** - at the end opposite to the one fitted with said magnet (6) - it provides for a flanged conical portion (9) widening in the flow direction and having a larger diameter portion substantially equal to the inner diameter of the body (1) and **in that** the flanged conical portion (9) is arranged upstream of said magnet (6).

2. A flow detector as claimed in claim 1, **characterized in that** said body (1) comprises a closed end portion (4), located downstream of said outlet opening (3), in which said magnet (6) is at least partially movable.

3. A flow detector as claimed in claim 2, **characterized in that** said end portion (4) comprises a section with a polygonal external surface (25) for laterally positioning said sensor (8) with respect to the axis of the magnet.

4. A flow detector as claimed in claim 1, **characterized in that** said outlet opening (3) comprises two side windows (10, 11).

5. A flow detector as claimed in claim 3, **characterized in that** said magnetic sensor (8) is housed in a container (20) mounted in correspondence of said end portion (4) of the body (1) through a collar (21) that engages said section (25) having a polygonal external surface.

6. A flow detector as claimed in claim 5, **characterized in that** said container (20) comprises a light indicator arranged to provide a visual indication of the state of flow inside the flow detector and **in that** the container (20) is at least partially transparent, so as to make visible to the outside the lighting of a light indicator.

7. A flow detector as claimed in claim 1, **characterized in that** the end of the body (1), in correspondence of the inlet opening (2) is provided with an inner threading (15) on which a metal ring (18) carrying a filter (16) is screwed.

## Patentansprüche

1. Ein Detektor zur Feststellung der Anbeziehungsweise Abwesenheit des Durchflusses einer Flüssigkeit, die durch eine Anlage fließt, wobei der genannte Flussdetektor jeweils folgendes umfasst:
einen verlängerten, innen hohlen Körper (1), der mit einer Einlassöffnung (2) und einer Auslassöffnung (3) für die genannte Flüssigkeit, einem in dem genannten Körper (1) axial beweglichen Element (5), einem Dauermagneten (6), welcher an dem genannten beweglichen Element befestigt ist, und einem Magnetsensor (8) ausgerüstet ist, der seitlich an dem genannten verlängerten Körper angeordnet ist, wobei der genannte Magnet (6) an einem Ende des genannten beweglichen Elements (5) montiert ist, und zwar so, dass eine entsprechende Verschiebung zwischen einer ersten und einer zweiten Stellung entsteht, und der genannte Magnet (6) eine Toroidform aufweist, wobei der genannte Sensor (8) einen entsprechenden Hall-Effekt-Sensor mit kombinierter CMOS Verdrahtungstechnik umfasst, und die Bewegung des genannten Magneten zwischen der jeweils ersten und zweiten Stellung eine Umkehrung des Magnetflusses (Φ), der den genannten Sensor durchquert, verursacht, wodurch der Sensor umgeschaltet beziehungsweise ein- und ausgeschaltet und die Feststellung des Vorhandenseins des Flusses in den hohlen Körper (1) gestattet wird, **dadurch gekennzeichnet, dass** der Durchmesser des Magneten (6) 2-5 mal, und vorzugsweise 3-4 mal, dessen Stärke beträgt, dass die genannte Auslassöffnung (3) eine seitliche Öffnung ist, die stromaufwärts vom genannten Magneten (6) angeordnet ist, sowie **dadurch gekennzeichnet, dass** das genannte bewegliche Element (5) als einteiliges Bauteil durch Pressen eines Kunststoffmaterials ausgebildet ist, sowie dadurch, dass es - an dem Ende, das demjenigen gegenüberliegt, welches jeweils mit dem genannten Magneten (6) ausgerüstet ist - einen geflanschten kegelförmigen Abschnitt (9) vorsieht, der sich in der Flussrichtung verbreitert und einen Abschnitt mit größerem Durchmesser aufweist, welcher im wesentlichen dem inneren Durchmesser des Körpers (1) entspricht, sowie dadurch, dass der geflanschte kegelförmige Abschnitt (9) jeweils stromaufwärts von dem genannten Magnet (6) angeordnet ist.

2. Ein Flussdetektor gemäß Anspruch 1, **dadurch gekennzeichnet, dass** der genannte Körper (1) einen geschlossenen Endabschnitt (4) umfasst, der sich stromabwärts von der genannten Auslassöffnung (3) befindet, in der der genannte Magnet (6) mindestens teilweise bewegt werden kann.

3. Ein Flussdetektor gemäß Anspruch 2, **dadurch gekennzeichnet, dass** der genannte Endabschnitt (4) einen Teil mit einer polygonalen äußeren Oberfläche (25) umfasst, um den genannten Sensor (8) in Bezug auf die Achse des Magneten seitlich positionieren zu können.

4. Ein Flussdetektor gemäß Anspruch 1, **dadurch gekennzeichnet, dass** die genannte Auslassöffnung (3) jeweils zwei Seitenfenster (10,11) umfasst.

5. Einen Flussdetektor gemäß Anspruch 3, **dadurch gekennzeichnet, dass** der genannte Magnetsensor (8) in einem Behälter (20) untergebracht ist, welcher auf der Höhe des genannten Endabschnitts (4) des Körpers (1) durch eine Buchse (21) montiert ist, die den genannten Abschnitt (25) mit einer polygonalen äußeren Oberfläche einkuppelt.

6. Ein Flussdetektor gemäß Anspruch 5, **dadurch gekennzeichnet, dass** der genannte Behälter (20) eine Leuchtanzeige umfasst, welche eine Sichtangabe des Zustands des Flusses im Innern des Flussdetektors umfasst, sowie dadurch, dass der Behälter (20) mindestens teilweise transparent ist, so dass das Aufleuchten der Leuchtanzeige von außen sichtbar ist.

7. Ein Flussdetektor gemäß Anspruch 1, **dadurch gekennzeichnet, dass** das Ende des Körpers (1) auf der Höhe der Einlassöffnung (2) mit einem inneren Gewinde (15) ausgerüstet ist, mit dem ein Metallring (18) mit einem Filter (16) verschraubt wird.

## Revendications

1. Détecteur pour capter, c'est-à-dire, détecter la présence ou l'absence du flux d'un liquide circulant à travers une installation, ledit détecteur de flux comprenant :
un corps creux à l'intérieur et allongé (1), pourvu d'une ouverture d'entrée (2) et d'une ouverture de sortie (3) pour ledit liquide, un membre (5) axialement mobile à l'intérieur dudit corps (1) et un aimant permanent (6) fixé audit élément mobile, et un capteur magnétique (8) placé latéralement sur ledit corps allongé, ledit aimant (6) étant monté sur une portion d'extrémité dudit élément mobile (5) de sorte qu'il puisse accomplir un déplacement entre une première et une deuxième positions, ledit aimant (6) présentant une forme toroïdale, ledit capteur (8) comprenant un détecteur à effet Hall avec un circuit à technologie « CMOS » associée, le mouvement dudit aimant entre ladite première et ladite deuxième positions provoquant une inversion du flux magnétique (Φ) traversant ledit capteur, déclenchant ainsi, c'est-à-dire, activant ou désactivant le capteur et permettant la détection de la présence du flux à l'intérieur du corps creux (1), **caractérisé en ce que** le diamètre de l'aimant (6) fait approximativement 2 à 5 fois, et de préférence 3 à 4 fois, son épaisseur, **en ce que** ladite ouverture de sortie (3) est une ouverture latérale placée en amont dudit aimant (6) et **caractérisé en ce que** ledit membre mobile (5) est réalisé en un élément d'une seule pièce par moulage dans un matériau plastique, et **en ce que** - sur la portion d'extrémité opposée à celle qui est équipée dudit aimant (6) - il prévoit une partie conique (9) fixée à l'aide d'une bride s'élargissant dans la direction du flux et présentant une partie dont le diamètre est plus grand et substantiellement égal au diamètre intérieur du corps (1) et **en ce que** la partie conique (9) fixée à l'aide d'une bride est placée en amont dudit aimant (6).

2. Détecteur de flux selon la revendication 1, **caractérisé en ce que** ledit corps (1) comprend une portion d'extrémité fermée (4), placée en aval de ladite ouverture de sortie (3), où ledit aimant (6) est au minimum partiellement mobile.

3. Détecteur de flux selon la revendication 2, **caractérisé en ce que** ladite portion d'extrémité (4) comprend une section dont la surface extérieure est polygonale (25) pour le positionnement latéral dudit capteur (8) par rapport à l'axe de l'aimant.

4. Détecteur de flux selon la revendication 1, **caractérisé en ce que** ladite ouverture de sortie (3) comprend deux fenêtres latérales (10, 11).

5. Détecteur de flux selon la revendication 3, **caractérisé en ce que** ledit capteur magnétique (8) est placé dans un compartiment (20), monté au niveau de ladite portion d'extrémité (4) du corps (1) par l'intermédiaire d'un collier (21) qui est encliqueté sur ladite section (25) présentant une surface extérieure polygonale.

6. Détecteur de flux selon la revendication 5, **caractérisé en ce que** ledit compartiment (20) comprend un voyant lumineux prévu pour fournir une indication visuelle de la condition du flux à l'intérieur du détecteur de flux et **en ce que** le compartiment (20) est au minimum partiellement transparent, de sorte que l'allumage d'un voyant lumineux soit rendu visible de l'extérieur.

7. Détecteur de flux selon la revendication 1, **caractérisé en ce que** la portion d'extrémité du corps (1), au niveau de l'ouverture d'entrée (2) est pourvue d'un filetage intérieur (15) sur lequel un anneau métallique (18) portant un filtre (16) est vissé.
